Europäisches Patentamt

(19) European Patent Office

Office européen des brevets

(11) EP 0 824 215 A2

(12) EUROPEAN PATENT APPLICATION

(43) Date of publication:
18.02.1998 Bulletin 1998/08

(51) Int. Cl.⁶: G01S 17/36

(21) Application number: 97113993.6

(22) Date of filing: 13.08.1997

(84) Designated Contracting States:
AT BE CH DE DK ES FI FR GB GR IE IT LI LU MC NL PT SE
Designated Extension States:
AL LT LV RO SI

(30) Priority: 15.08.1996 JP 215711/96

(71) Applicant: NIKON CORPORATION
Tokyo (JP)

(72) Inventor:
Kayama, Yasunaga,
c/o Nikon Corporation
2-2-3, Marunouchi, Chiyoda-ku, Tokyo (JP)

(74) Representative:
Viering, Jentschura & Partner
Postfach 22 14 43
80504 München (DE)

(54) **Distance measuring apparatus employing a modulated light source and phase shift detection**

(57) A distance from an object to a light source (3) of a distance measuring apparatus is determined from a phase difference between a received signal which represents a reflected light beam from the object and a reference signal which is obtained directly from a transmitted light beam. The reflected signal and the reference signal are photoelectrically generated by a light-receiving unit (8). The level of the received signal is adjusted by a level adjustor (14) to the optimum level suitable to a phase difference detector (20). Consequently, the dynamic range of a phase difference detector (20) of the distance measuring apparatus can be made narrower. A light intensity regulator (19) is positioned between the light source (3) and the light-receiving unit (8) along a reference optical path (16), and the regulator (19) regulates the intensity of the reference light so as to be substantially equal to the intensity of the reflected light or within a prescribed range therefrom. Because the light intensity regulator (19) utilizes liquid crystal which has a relatively high attenuation rate, no mechanical drive is required. The phase difference detector (20) detects a phase difference between the received signal that has passed through the level adjustor (14) and the reference signal that has passed through the light intensity regulator (16). The distance measuring apparatus efficiently utilizes the intensity of a received light beam from a range-measuring optical path (30A) without attenuating the intensity.

FIG. 1

**Description**

BACKGROUND OF THE INVENTION

1. Field of the Invention

This invention relates to a distance measuring apparatus which emits modulated light toward an object and receives reflected light from the object to determine a distance from the object.

2. Description of Related Art

The basic idea of a distance measuring apparatus using an optical wave is to emit modulated light toward an object, receive reflected light from the object, and measure a phase difference between the emitted light wave and the received light wave. The distance from the object is determined based on the phase difference and the wave length of the modulated light. This type of distance measuring apparatus utilizes a low frequency for rough-range measurement and a high frequency for precise-range measurement according to the relation between the distance from the object and the wave length of modulated light.

The distance measuring apparatus receives a light beam reflected by the object, and converts the received light into an electric signal. The phase difference between the transmitted light and the received light is detected in an electric circuit after performing a photoelectric conversion. However, the phase detected by the electric circuit often fluctuates due changes in temperature. To eliminate the error, it has been proposed to provide a reference optical path within a distance measuring apparatus (in, for example, Japanese utility model publication No. 52-34999). More specifically, the error which occurs in the measuring circuit is canceled by subtracting a reference distance, which is determined based on a phase difference obtained from the reference optical path, from a measured distance which, in turn, is determined based on a phase difference obtained from the actual measurement optical path.

Phase fluctuation also occurs because a signal level within the measuring circuit differs according to a difference in the intensity of received light, due to a limit of the dynamic range of the measuring circuit. To overcome this drawback for example, Japanese patent application publication Nos. 51-8338, 51-8339, and 51-8340 propose to provide a light intensity regulation means in the range-measuring optical path or the reference optical path to make the light intensity from the range-measuring optical path substantially equal to the light intensity from the reference optical path, so that the intensity of the received light falls within the linear range of the measuring circuit.

However, if a light intensity regulation means is provided on the range-measuring optical path, the maximum light-receiving amount becomes relatively low. As a result, the maximum measurable range becomes very limited The reduction in maximum light-receiving amount also limits the range of objects which are subject to distance measurement. Especially when using a light intensity regulator that utilizes a light intensity control element, such as liquid crystal, and that does not require a mechanical drive, the maximum light transmissivity is typically reduced by at least 20 percent (%). This makes it impossible to measure a long distance or a distance from an object having a very low reflectance, because in such instances the light intensity received by the measuring apparatus is insufficient.

If a light intensity regulator is provided on the reference optical path, then the phase difference detector must have a dynamic range equal or equivalent to the dynamic range of the received light intensity from the range-measuring optical path. A measuring circuit which remains linear over a wide range is expensive. Furthermore, it is difficult for this type of measuring instrument to improve the measuring accuracy.

SUMMARY OF THE INVENTION

In view of the problems in the prior art, it is an object of the invention to provide a distance measuring apparatus for measuring a distance from an object using an optical wave, which can efficiently utilize a light intensity received from a range-measuring optical path without attenuating the light level, and which permit use of a phase difference detector having a narrow dynamic range.

It is another object of the invention to provide a distance measuring apparatus for measuring a distance from an object using an optical wave, which includes a light intensity regulator that adjusts a light intensity received from a range-measuring optical path so as to be substantially equal to a light intensity received from a reference optical path. The light intensity regulator uses a light intensity control element, such as liquid crystal, which does not need a mechanical drive.

To achieve the objects, In one aspect of the invention, a distance measuring apparatus has a light source for emitting a light beam toward an object. A light beam reflected from the object is received by the distance measuring apparatus. The distance measuring apparatus determines a distance between the light source and the object based on a phase difference between a received signal obtained from the reflected light and a reference signal obtained from reference light which is a direct light beam from the light source. A light receiving unit receives the reflected light and the reference light, and photoelectrically converts them into the received signal and the reference signal, respectively. A level adjustor adjusts the level (e.g., magnitude or amplitude) of the received signal to a predetermined allowable level according to the quantity of the reflected light. A light intensity regulator is positioned between the light source and the light receiving unit, and regulates the light intensity of the reference light so as to be the same level as the reflected light or within a predetermined range therefrom. A phase difference detector detects a phase difference between the received signal, which has passed through the level adjustor, and the reference signal, which has passed through the light intensity regulator.

Thus, the intensity of the deference light is made substantially equal to the intensity of the measuring (reflected) light through the light intensity regulator prior to being supplied to the phase difference detector. At the same time, the level of the received signal obtained from the reflected light is also adjusted prior to being supplied to the phase difference detector, so that the level falls within the dynamic range of the phase difference detector. Accordingly, even if the intensity of the measuring (reflected) light is insufficient and the level of the received signal is low, the distance from the object can be reliably measured because the intensity of the received light and the intensity of the reference light are made substantially equal. Moreover, the dynamic range of the phase difference detector can be narrowed. The light intensity regulator comprises a plurality of polarizers and polarization control elements, such as liquid crystal, inserted between the polarizers. This arrangement does not need a mechanical drive. The transmissivity is changed by a control signal which is, for example, a voltage applied to the polarization control elements.

BRIEF DESCRIPTION OF THE DRAWINGS

The above and other objects, features, and advantages of the present invention are further described in the detailed description which follows, with reference to the drawings by way of non-limiting exemplary embodiments of the present invention, wherein like reference numerals represent similar parts throughout the several views, and wherein:

Fig. 1 is a block diagram showing the principle of the present invention; and
Fig. 2 is a block diagram showing the detailed structure of a distance measuring apparatus according to an embodiment of the invention.

DETAILED DESCRIPTION OF THE PREFERRED EMBODIMENT

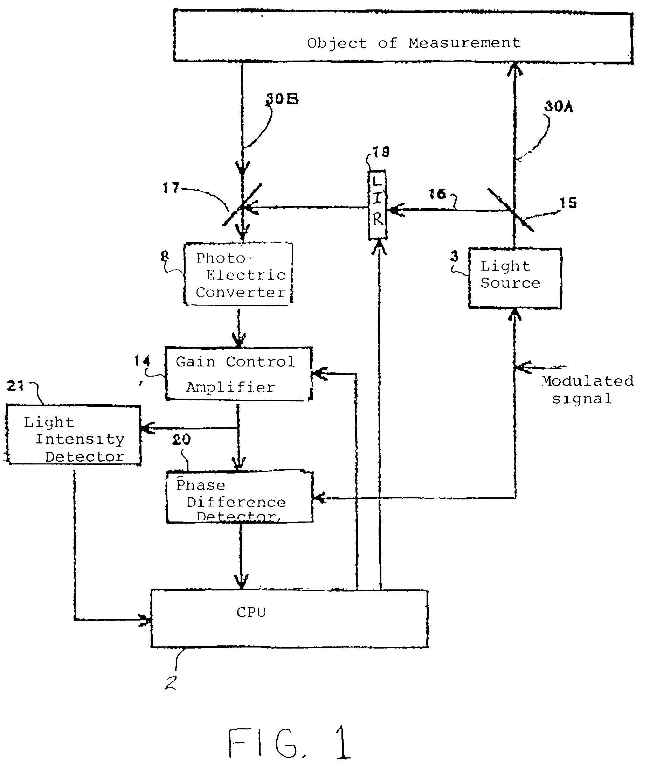

The subject matter of the Japanese priority document 8-215711 is hereby incorporated by reference as if fully set forth herein. Fig. 1 is a diagram showing the principle of the present invention. The elements shown in Fig. 1, other than the object that is to be measured, constitute a distance measuring apparatus. A modulated signal having a frequency that matches the range of the object is supplied to the light source 3. The electric signal is converted to light, which is then transmitted along the range-measuring optical path 30A to the object. The light is reflected from the object, and returns along the rang-measuring optical return path 30B to the photoelectric converter 8 which serves as a light-receiving unit. The range-measuring optical paths 30A and 30B essentially do not include any elements that attenuate the light intensity. Thus, the maximum measurable distance is maintained large and many different types of objects may be the subject of the distance measurement.

Meanwhile, a reference optical path 16 is formed within the distance measuring apparatus. The light emitted from the light source is guided through a beam splitter 15 and a beam combiner 17 along the reference optical path 16 to the photoelectric converter 8. This light beam directly guided from the light source to the photoelectric converter 8 is designated as the reference light. Before the reference light is received by the photoelectric converter 8, the intensity of the reference light ls adjusted by the light intensity regulator 19 so as to be substantially equal to the intensity of the reflected range-measuring light or within an allowable range therefrom. More specifically, the level of the electric signal resulting from the photoelectric conversion of the reflected range-measuring light by the photoelectric converter 8 represents the reflected range-measuring light and is detected by the light intensity detector 21. A signal indicative of the level of this electric signal is then supplied to the CPU 2. The CPU 2 supplies a control signal based on the detection result to the light intensity regulator 19. The light intensity regulator 19 adjusts the intensity of the reference light based on the control signal from the CPU 2. The light intensity regulator 19 is, for example, of a liquid crystal type, in which liquid crystal is inserted between a plurality of polarizers. The light transmissivity of the liquid crystal changes in response to a change in a voltage applied thereto, thereby adjusting the overall light transmission. This type of light intensity regulator is advantageous because it does not require a mechanical drive and is reliable because of its lack of vibration. Also, the response of the liquid crystal is advantageously quick.

The level of the electric signal representative of the reflected range-measuring light is regulated by the CPU 2. As has been described, the level of the electric signal is detected by the light intensity detector 21. The gain of the gain control amplifier 14 is regulated by the CPU 2 so that the detected level of the electric signal falls within a dynamic range of the phase difference detector 20. In other words, a received signal having a regulated level is supplied to the phase difference detector 20. The phase difference detector 20 first obtains a phase difference $\phi a$ between the transmitted modulated signal and a signal received from the range-measuring optical path 30B, and then obtains a phase difference $\phi b$ between the transmitted modulated signal and a signal received from the reference optical path 16. Based on these phase differences, the distance L from the object is determined according the following formula:

$$L = c(\phi a - \phi b)/4\pi f \qquad (1)$$

where c is the velocity of light propagating through the air, and f is a modulation frequency.

Only those signals whose levels are within the dynamic range of the phase difference detector 20 are supplied to the phase difference detector 20. Therefore, a phase difference can be measured in a range with a high linearity, allowing a highly accurate detection.

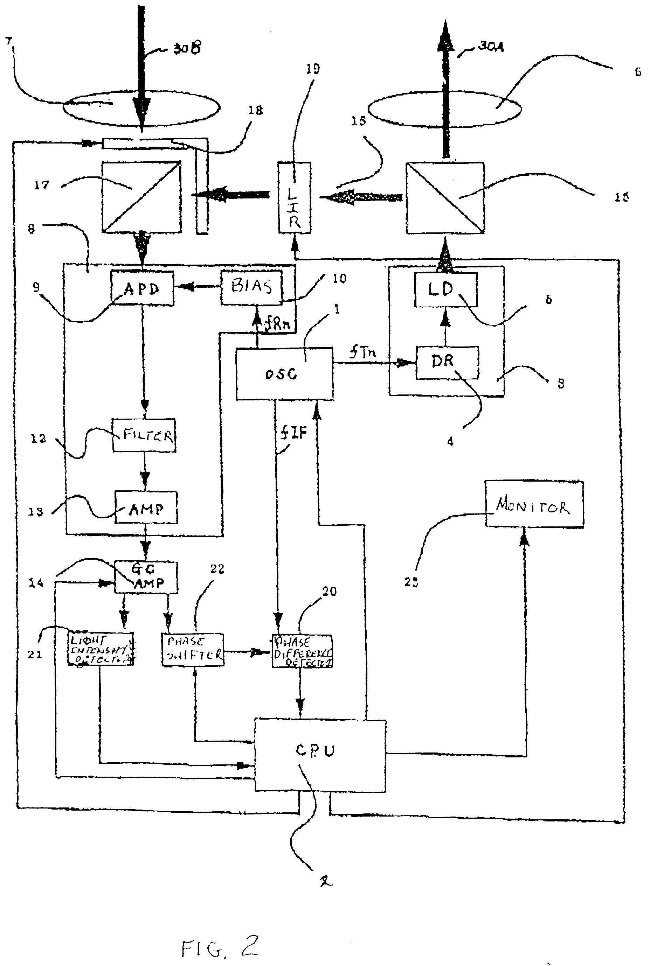

Fig. 2 illustrates the detailed structure of a distance measuring apparatus according to an embodiment of the invention. The oscillator 1 generates signals having, for example, five different frequencies, namely, modulation frequencies fT1, fT2 for the light source 3, a phase-detection frequency f1F, and demodulation frequencies fR1 (which equals fT1-f1F) and fR2 (which equals to fT2-f1F). The modulation frequency fT1 is used for precise measurement of a distance, and is set relatively high, e.g., 15MHz. The other modulation frequency fT2 is used for rough measurement, and is set relatively low, e.g., 75KHz. The two modulation frequencies are selectively used according to a command signal supplied from the CPU 2. The modulation frequencies fT1 and fT2 are supplied to the light source 3, and the demodulation frequencies fR1 and fR2 are supplied to the light-receiving unit 8.

With the higher modulation frequency fT1 of 15MHz light goes and returns through the air for a distance of 10m within a cycle. Accordingly, a distance less than the 10-meter range can be accurately measured by precisely detecting the phase. However, since one cycle of the 15MHz signal is 10m, there is no distinction between 1m and 11m. The lower modulation frequency fT2 therefore is simultaneously used for rough measurement. Corresponding to these modulation frequencies, two demodulation frequencies fR1 and fR2 are provided.

Within the light source 3, the drive circuit 4 generates a driving signal from the modulation frequency signal fTn to drive the semiconductor laser diode 5. The semiconductor laser diode 5 emits modulated light. The light emitted from the light source 3 is shaped by the light-transmitting objective lens 6, and guided to the object. The light is reflected by the object, collected by the light-receiving objective lens 7, and enters the light-receiving unit 8. As has been mentioned above, the light-receiving unit 8 is a photoelectric converter which includes an avalanche photodiode 9, a bias circuit 10 for the avalanche photodiode 9, a filter 12 and an amplifier 13. A demodulation frequency fRn selected by the CPU 2 is supplied from the oscillator 1 to the bias circuit 10, and a bias voltage having that demodulation frequency is applied to the avalanche photodiode (APD) 9.

In general, the gain of an avalanche photodiode varies in response to a bias voltage applied thereto.

Accordingly, when a demodulation frequency fRn is applied as a bias voltage to the avalanche photodiode (APD) 9, the output of the APD 9 has a phase-detection frequency component f1F which is a difference (fTn-fRn) between the modulation frequency fTn and the demodulation frequency fRn. The output of the APD 9 maintains a phase difference $\phi$ of the received signal. This operation is generally known as heterodyne demodulation, which is used when converting the frequency component of a high frequency signal to a low frequency without disturbing the phase component. Through this operation, the received rang-measuring signal becomes a low frequency signal. The phase difference detector 20 will detect a phase difference of the received signal in its low frequency form which, in turn, facilitates phase detection while maintaining high accuracy.

The photoelectrically converted signal is supplied from the APD 9 to the filter 12 which extracts the range-measuring frequency component of the electric signal. The electric signal which has passed through the filter 12 is amplified by the amplifier 13, and supplied to the gain control amplifier 14.

Meanwhile, the light beam emitted from the light source 3 is split by the splitter 15. The split light component is guided to the light-receiving unit 8 through the light combining unit 17 along the reference optical path 16. An optical path switching unit 18, which is constructed as, for example, a mechanical shutter, is positioned before the light combining unit 17. The optical path switching unit 18 selectively allows passage of either the reference optical path or the range-measuring optical path, and blocks the other, according to a command signal from the CPU 2. A light intensity regulator 19 is provided on the reference optical path 16. The light intensity regulator 19 controls the light intensity in the reference optical path based on a command signal from the CPU 2, so that the light intensity in the reference optical path becomes substantially equal to the light intensity in the rang-measuring optical path. The light intensity regulator may be of an ordinary mechanical type having a mechanical drive for changing the angle between two polarizers. However, as has been mentioned, it is preferable to utilize a polarization control element, such as liquid crystal, in the light intensity regulator, so that the light transmissivity changes in response to a voltage (i.e., a control signal) applied to the polarization control element. Other than liquid crystal, a Kerr cell utilizing the Kerr effect or a Pockels cell may be used to control the transmissivity according to a voltage applied thereto.

The gain control amplifier 14 controls its gain according to a control signal from the CPU 2. The gain control amplifier 14 appropriately amplifies the level of the input signal which has been photoelectrically converted into an electric signal by the light-receiving unit 8, and supplies the amplified signal to the phase difference detector 20 through the phase shifter 22. Although the dynamic range of the phase difference detector 20 is designed to be relatively narrow, the detection accuracy is high because the electric signal is modified by the gain control amplifier 14 so as to have a level within the dynamic range of the phase difference detector 20. The light intensity detector 21 determines the Intensity of the received (reflected) light based on the output of the gain control amplifier 14. The output of the light intensity detector 21 is supplied to the CPU 2 for gain adjustment. The CPU 2 supplies a gain control signal to the gain control amplifier 14 according to the output signal from the light intensity detector 21.

When the phase difference detector 20 receives the received reflected signal that has been adjusted to a certain level, the phase difference detector 20 detects a phase difference $\phi a$ between the received signal and the transmitted signal, having a range-measuring frequency f1F. Similarly, the reference light received from the reference optical path is amplified with a gain, and supplied to the phase difference detector 20. The phase difference detector 20 detects a phase difference $\phi b$ between the reference signal and the transmitted signal with the frequency f1F. The distance from the object is calculated by the CPU 2 according to formula (1). The calculation result is displayed on the monitor 23.

The phase shifter is designed to appropriately take an average of the detected phase difference values. If the phase difference detected by the phase difference detector 20 is around 0°, the detection result will become, for example, 0° or 364° depending on the detection error. In such a case, a correct average cannot be obtained from multiple rounds of phase difference detection. Therefore, the phase shifter 22 is provided to shirt the detected phase by a certain degree as a shifting amount, thereby avoiding an incorrect average calculation. The phase shifter 22 subtracts the shifting amount from the average. The shifting amount of the phase shifter 22 is controlled by the CPU 2.

The operation of the distance measuring apparatus shown in Fig. 2 will now be described. First, the gain control amplifier 14 sets the level of a received signal. The optical path switching unit 18 selects the range-measuring optical path 30B according to a command from the CPU 2. The gain of the gain control amplifier 14 is set to an appropriate value. The modulation frequency and the demodulation frequency are set to appropriate values in the oscillator 1. The selected modulation frequency is supplied to the light source 3, and the demodulation frequency is supplied to the light-receiving unit 8. The semiconductor laser of the light source 3 emits a laser beam having the selected modulation frequency toward the object. The light-receiving unit 8 receives a reflected laser beam from the object. The received beam is converted to an electric signal, the level of which is measured by the light intensity detector 21. The CPU 2 compares the level of the electric signal with a predetermined optimum level of a received signal, and changes the gain of the gain control amplifier 14 so that the level of the electric signal becomes most suitable to the phase difference detector 20.

Then, the optical path switching unit 18 selects the reference optical path 16. The gain of the gain control amplifier 14 maintains the same value. The CPU 2 changes the attenuation amount of the light intensity regulator 19 so that the light intensity from the reference optical path achieves an optimal intensity level. As a result, the level of the reference signal detected by the light intensity detector 21 is optimized.

After the gain of the gain control amplifier 14 and the attenuation amount of the light intensity regulator 19 are appropriately set, the phases of the signals from the range-measuring optical path 30 and the reference optical path 16 are detected based on the modulation and demodulation frequencies for precise measurement and the modulation and demodulation frequencies for rough measurement. Using the detection result, the distance from the object is calculated according to formula (1).

In this arrangement, a range-measuring light and a reference light which have optimum signal levels are supplied to the phase difference detector 20. The phase difference detector 20 can detect the phase difference based on the optimum signal levels. Even if an inexpensive phase detector with a relatively narrow dynamic range is used in the distance measuring apparatus, a phase difference can be detected with high accuracy. While the intensity of the reference light is attenuated by the light intensity-regulator 19, the intensity of the range-measuring light is not attenuated. Therefore, the maximum measurable range and types of objects which are subject to distance measurement are both maximized.

As has been described, a light intensity regulator is not provided in the range-measuring optical path, and detection of distances to a broad range of objects located at far distances can be achieved. A light intensity regulator is provided on the reference path to regulate the light intensity in the reference optical path so that it matches the intensity of the range-measuring light beam. The gain control amplifier adjusts the level of a received signal to the optimum level suitable to the phase difference detector. Thus, the measurement accuracy is improved, while reducing the cost of the phase difference detector. Moreover, liquid crystal is used in the light intensity regulator to eliminate the need for a mechanical drive, whereby light intensity is regulated quickly and precisely.

While the invention has been described by way of exemplary embodiments, it is understood that the words which have been used herein are words of description, rather than words of limitation. Changes may be made, within the purview of the appended claims, without departing from the scope and the spirit of the invention in its broader aspects. Although the invention has been described herein with reference to particular structures, components, means, materials, and embodiments, it is understood that the invention is not limited to the particulars disclosed. The invention extends to all equivalent structures, components, means, and uses such as are properly within the scope of the appended claims.

**Claims**

1. A distance measuring apparatus for measuring a distance between an object and a light source emitting a light beam toward the object, comprising:

   a light-receiving unit for receiving a reflected light beam reflected from the object and a reference light beam which is emitted from the light source and applied to the light-receiving unit without being reflected by the object, and for photoelectrically converting the reflected light beam and the reference light beam into a received signal and a reference signal, respectively;
   a level adjustor for adjusting a level of the received signal to a predetermined level according to an intensity of the reflected light beam;
   a light intensity regulator positioned between the light source and the light-receiving unit, for regulating an intensity of the reference light beam so as to be within a predetermined range of the intensity of the reflected light beam; and
   a phase difference detector for detecting a phase difference between:
   the received signal as said received signal exits said level adjustor; and
   the reference signal as regulated by virtue of said light intensity regulator regulating said intensity of the reference light beam, said distance being measured by said distance measuring apparatus based on said phase difference.

2. The distance measuring apparatus claimed in claim 1, wherein the light intensity regulator has a plurality of polarizers and polarization control elements inserted between the polarizers, and wherein a transmissivity of the light intensity regulator is changed by controlling the polarization control elements.

3. The distance measuring apparatus claimed in claim 1, wherein the level adjustor adjusts the level of the received signal so as to be within a dynamic range of the phase difference detector prior to supplying the received signal to the phase difference detector.

4. The distance measuring apparatus claimed in claim 1, wherein the level adjustor has a gain control amplifier for receiving the received signal as an input and amplifying the received signal with a preset gain.

5. The distance measuring apparatus claimed in claim 1, wherein said light Intensity regulator is arranged so as to regulate the intensity of the reference light beam such that the intensity of the reference light beam is substantially equal to the intensity of the reflected light beam.

FIG. 1

FIG. 2